# EUROPEAN PATENT APPLICATION

(11) **EP 4 170 438 A1**
(43) Date of publication of application: **26.04.2023**
(21) Application number: 22177530.7
(22) Date of filing: 07.06.2022
(51) Int. Cl.: G05B 13/02, G05B 19/042, G05B 19/406, G08B 21/02, F16P 3/14

(54) **SAFETY CONTROL SYSTEM**

(71) Applicant: PIMU LLC, 2012 Auvernier (CH)
(72) Inventor: Lepoittevin, Yann, 1005 Lausanne (CH); Jaques, Christian, 2012 Auvernier (CH)
(74) Representative: Bals & Vogel Patentanwälte PartGmbB

(57) **Abstract**

Provided is a safety control system (100) for a machine (200). The safety control system comprises a computing device (104) and an imaging sensor equipment (102) configured to collect, in particular continuously collect, images in the vicinity of the machine (110). The computing device (104) is configured to process, using a trained neural network, the collected images in order to detect at least one body part (112) within at least one predefined zone (Z1) of the vicinity of the machine (110) and generate a corresponding safety signal (108). The safety control system further comprises a control unit connectable to the machine, configured to trigger a safety measure of the machine based on the safety signal (108).

## Description

### Field of the invention

The present invention relates to the general field of systems and methods for detecting dangerous situations in human-machine interactions. More specifically, the invention relates to a safety control system for a machine, to a machine equipped with such a safety control system, the use of latter machine and to a method for validating a trained neural network. Furthermore, the invention relates to a method for controlling a machine using a safety control system and a computer program product.

### Technical field

Although nowadays a number of industrial machines are automatized and human-machine interaction is not needed for them to operate, in many situations such a human-machine interaction cannot be avoided, rather is even needed. Indeed, artisans such as carpenter, metalworker or watchmaker may have to operate industrial machines in order to process a workpiece.

Typically, operators must position at least a body part, e.g. a hand or a foot, in the vicinity of dangerous tools in industrial machines. In some applications an immaterial laser barrier may be used. Thanks to their simplicity, immaterial barriers are a good way to protect humans around machines as anything crossing the laser beams of the barrier will stop the machine. However, machines such as rolling mills, hydraulic presses, woodworking machines, printing presses, etc., cannot be made safe using immaterial barriers. In fact, on those machines there is the need for an operator to bring some material, e.g. workpiece close to the dangerous tools to ensure the material is processed correctly.

Hence, there is an imminent need in providing a safety control system allowing an operator to closely interact with a machine, in particular to closely interact with a dangerous tool of a machine, while increasing the safety of said operator.

### Summary of the invention

Accordingly, it may be desirable to provide an improved safety control system, which at least mitigates some of the above-mentioned drawbacks of conventional systems and procedures.

This is achieved by the subject matter of the independent claims, wherein further embodiments are incorporated in the dependent claims and the following description.

According to a first aspect of the present disclosure, there is provided a safety control system for a machine, comprising an imaging sensor equipment configured to collect, in particular continuously collect, images in the vicinity of the machine. The safety control system further comprises a control unit and a computing device. The computing device is configured to process, using a trained neural network, the collected images in order to detect at least one body part within at least one predefined zone of the vicinity of the machine and generate a corresponding safety signal. The control unit is connectable to the machine and configured to trigger a safety measure of the machine based on the safety signal.

Summarized in other words, a safety control system for a machine, which analyses the surroundings of said machine with a trained neural network to detect dangerous human-machine interactions while allowing safe use of the machine is proposed.

The imaging sensor equipment may comprise one or more cameras. The imaging sensor equipment may be configured to provide a 3D imaging system. The imaging sensor equipment may be positioned around, at, or on the machine in order to collect images in the vicinity of the machine, while covering the biggest possible vicinity of the machine. It may be possible for an operator or user to orientate, position or re-position the imaging sensor equipment, e.g. at its convenience.

It is noted, that the collected images provided by the imaging sensor equipment to the computing device may be both image- and/or video-files. The processing device may be configured to process the collected images based on the corresponding provided file format.

In the context of the present disclosure, the vicinity of the machine may designate one or more regions or area adjunctive to the machine. Alternatively or in addition, the machine itself may be part of, i.e. enclosed by, the vicinity of the machine. The vicinity of the machine may in general be understood as designating one or more regions or area within which a human may operate the machine and/or within which a human machine interaction may occur. The images collected with the imaging sensor equipment can in particular respectively show at least a portion of a processing tool of the machine, e.g. of a drill, saw, press or roll. The images can for instance show only a part of the machine as a whole, e.g. be more like a close-up.

In the context of the present disclosure, the computing device may also be designated as a detector or the like. In fact, the computing device is to be understood as any devices being configured to process collected images and to detect, using a trained neural network, a body part within at least one predefined zone of the vicinity of the machine. The trained neural network may be trained to jointly detect an object (of any nature) appearing in the collected image(s) and classify said detected object. The trained neural network may hence generate both detection datasets and classification datasets.

It is noted that a plurality of body part may be detected by the computing device. Further, since the computing device may be configured to detect a body part, it may be configured to discriminate body parts from non-human material, such as any workpiece or element being present in a vicinity of the machine.

The at least one predefined zone is for example a partial area in the respective image, it may for instance be set by a user or an operator. Said predefined zone may be stored in the computing device for example. In addition, the predefined zone may define a zone within the vicinity of the machine, which is estimated - e.g. by the operator or the user-to be potentially dangerous or to be potentially the most dangerous zone within the vicinity of the machine. Specifically, the predefined zone may be adjunctive to, or include a dangerous tool of the machine. Further, the predefined zone may define a chosen safety level in the vicinity of the machine.

As detailed below, the computing device may be configured to detect at least a body part within one or two predefined zones. It is hence conceivable, that the vicinity of the machine may be divided in two or even more predefined zones.

Once the computing device recognizes or detects a body part within said predefined zone or zones, action may be taken. In principle, said predefined zone designates a dangerous zone, which should preferably not be entered by the operator. Therefore, based on whether a body part has been detected within said zone or not, the computing device may be configured to generate a corresponding safety signal.

In the context of the present disclosure, a safety signal may contain information relative to the risk an operator may presently incur. A safety signal may correlate with a level of danger, e.g. depend from the distance between the at least one body part and a dangerous tool of the machine.

The control unit may be configured to communicate with the machine, e.g. with a processor of the machine, via a wire or via a wireless interface. Therefore, said control unit may be configured to trigger a safety measure of the machine based on the safety signal. In other words, the control unit may receive from the computing device an information relating to the current risk of the operator and transform said information in order to trigger a safety measure of the machine. The control unit can be integrated in the computing device. In the context of the present disclosure, a safety measure may designate an action taken by the machine, a routine to be ran by the machine and/or any act influencing, preferably immediately changing, the current operation of the machine.

In principle, a safety measure may designate a measure aiming to increase the safety of the operator of the machine and preferably reliably and/or efficiently avoid any injury of the operator interacting and/or using the machine.

The safety control system may allow increasing the safety of an operator interacting with a machine. Further, the safety control system may allow differentiating between normal and dangerous interactions of an operator with a machine. Moreover, the safety control system may allow discriminating between body parts and everything else, such as a workpiece required to enter the predefined zone considered as dangerous for an operator.

According to an embodiment, the safety control system may further comprise a monitoring unit configured to request repeatedly a reaction of the imaging sensor equipment and/or the computing device in response to a test measure of the monitoring unit. The control unit may further be configured to trigger a safety measure of the machine based on the reaction of the imaging sensor equipment and/or computing device in response to the test measure.

In other words, a monitoring unit may be provided, which may be configured to ensure that the imaging sensor equipment and/or the computing device are up and/or trouble-free running, preferably up and/or trouble-free running at all time. This may allow to further increase the reliability of the safety control system and/or to further increase the safety of an operator using a machine.

For instance, a safety measure may not only be triggered when a body part has been detected by the computing device, but also whenever, i.e. if, the monitoring unit appears not to receive the requested reaction of the imaging sensor equipment and/or the computing device in response to a test measure. This may imply that the imaging sensor equipment and/or the computing device is/are not working as expected and/or properly. The safety of the operator hence may not be guaranteed, as the detection of a body part may not be performed as expected and/or correctly. Therefore, the control unit may trigger a safety measure of the machine, such as stopping or slowing down at least a part of the machine or actuating a mechanical shutter or the like.

In the context of the present disclosure, it is noted that said reaction may for example correspond to a response signal generated by the imaging sensor equipment and/or the computing device or a routine carried out by the imaging sensor equipment and/or the computing device. The monitoring unit may hence run a test and request a specific signal, e.g. a response signal, to ensure the working state of the safety control system. The response signal may be transferred to and received by the monitoring and/or control unit.

According to an embodiment, the monitoring unit of the safety control system may be configured to perform the test measure in a field of view of the imaging sensor equipment to interact onto at least some of the images collected by the imaging sensor equipment and to request the imaging sensor equipment and/or the computing device in response to send a response signal correlating with the test measure.

In other words, the images collected by the imaging sensor equipment may be altered by the test measure without of course compromised or impaired detection of the at least body part being carried out by the computing device. Hence, the test measure may for example be in a field of view of the imaging sensor, where the operator may incur no danger, e.g. in a zone of the vicinity of the machine being not considered as very dangerous.

For example, the test measure may correspond to projecting a visual pattern in a field of view of the imaging sensor equipment. The imaging sensor equipment and/or the computing device may hence be configured to send a response signal containing information relative to the visual pattern.

Based on the response signal and/or on an evaluation of the response signal, the monitoring unit may hence confirm or disprove a trouble-free functioning of the imaging sensor equipment and/or computing device. Summarizing, the monitoring unit may be configured to evaluate the operation of the imaging sensor equipment and/or computing device. The monitoring unit may further be configured to trigger a safety measure of the machine based on the response signal.

According to an embodiment, the monitoring unit may be configured to flash a series of lights into the field of view of the imaging sensor equipment as the test measure.

Therefore, the imaging sensor equipment and/or the computing device may be configured to process the flashed series of lights as a test measure in order to send a response signal. The response signal may preferably correlate with the flashed series of lights. In particular, the computing device may be configured to process the collected images of the imaging sensor equipment such as to recognize the series of lights within the collected images. Accordingly, the computing device may generate a response signal containing the information on the series of lights, e.g. whether they have been correctly recognized and/or correctly processed, and/or a scheme of flashed series of lights.

The monitoring unit may hence be configured to evaluate the response signal. Based on such an evaluation, the monitoring unit may confirm or disprove a trouble-free functioning of the imaging sensor equipment and/or the computing device.

According to an embodiment, the computing device may further be configured to process the collected images at an optimized frame rate, in particular at a frame rate of at least 30 frame per second (fps).

In other words, it has been found, that the safety control system may need to perform a body part detection at 30 frames per seconds (fps) at least in order to ensure a certain safety level. If the processing time of the computing device is too long, the safety of the operator may not guaranteed. The safety control system may either be used as such on a high end computer to achieve high frame-rates, or, if computing power is limited, one may optimize the algorithm, e.g. the processing model it uses, to reduce the computing time. Optimization techniques such as, but not limited to, pruning, distillation and quantization can be used to achieve high framerates with limited computing power.

According to an embodiment, the triggered safety measure of the machine may correspond to stop or at least slow down a movement of a processing tool of the machine.

In other words, whenever a body part is detected within a corresponding predefined zone, the machine may be operating such as to avoid the user to get hurt or injured. For example, at least a part of the machine may be stopped and/or a task of the machine may be interrupted, preferably immediately interrupted. In some example embodiments, a task of the machine may be slowed down. For instance, a processing tool, e.g. a dangerous tool, of the machine may be actuated in a slower mode than previously to the triggered safety measure or may be stopped completely.

According to an embodiment, the computing device may further be configured to process, using a trained neural network, the collected images in order to detect at least one body part within at least two predefined zones of the vicinity of the machine and generate a corresponding safety signal. The at least two predefined zones may define a chosen safety level in the vicinity of the machine.

According to an embodiment, one of the safety levels may correspond to slow down the movement of the processing tool and another one of the safety levels corresponds to stop the movement of the processing tool.

In other words, it may be possible to define multiple safety levels, also designated as level of danger, each zone having its specific safety measures. For instance, possible safety levels may be "safe", "intermediate" and/or "dangerous". If a body part is detected by the computing device within a zone corresponding to a safety level "intermediate", the safety measure may correspond to slow down the machine or a part of the machine. Alternatively, a detection of a body part in an "intermediate" safety level may solely trigger a warning sign generated by the machine. If a body part is detected within a zone corresponding to the highest defined safety level, for example, a more drastic safety measure, such as completely shutting down the machine may be triggered by the control unit.

It is noted that the safety levels may be defined, in addition or alternatively, based on the body part being detected and/or on the nature of the body part being detected. For instance, it is conceivable that the safety levels depend on whether the detected body part is wearing protection or not. Merely as an example, it is noted that a hand wearing a temperature-resistant glove may be able to come closer to the dangerously hot machine tool as a bear hand without any protection.

A further aspect of the present disclosure relates to a machine equipped with a safety control system, as described hereinabove and hereinbelow. The machine comprises an imaging sensor equipment configured to collect, in particular continuously collect, images in the vicinity of the machine. It further comprises a control unit and a computing device, which may be configured to process, using a trained neural network, the collected images in order to detect at least one body part within at least one predefined zone of the vicinity of the machine and generate a corresponding safety signal. The control unit may be connected to the machine and be configured to trigger a safety measure of the machine based on the safety signal.

According to an embodiment, the machine may further be equipped with a monitoring unit configured to request repeatedly a reaction of the imaging sensor equipment and/or the computing device in response to a test measure of the monitoring unit. The control unit may further be configured to trigger a safety measure of the machine based on the reaction of the imaging sensor equipment and/or computing device in response to the test signal. A trigger unit of the monitoring unit, which triggers the test measure of the monitoring unit, may be independent of the imaging sensor equipment and/or of the computing device. The latter can for instance mean that the monitoring unit has its own logic unit and power supply.

According to an embodiment, the machine may belong to a set with a plurality of machines, each equipped with a safety control system as described hereinabove and hereinafter, wherein the trained neural networks of these control systems may differ from each other. In other words, the neural network may be trained and fine-tuned for a specific machine, especially by collecting data on one specific machine of the set with a plurality of machines and adding it to the training set.

The plurality of machines of said set may preferably be identical in their design and/or their control systems apart from the neural network. Therefore, the neural networks of the plurality of machines may differ from each other because they have been trained on the machine.

The training set may be obtained by collecting images of the body parts which should be detected by the computing device. The training set, i.e. the collected image may be manually annotated.

For instance, the training set may correspond to images with manually added annotations. In the context of the present disclosure, an annotation may comprise a class. A class may belong to a hierarchical tree of classes. For example, a class may designate a body part, whereas another class may designate a workpiece. Each detected object may be part of a class and annotated with a class member. Concretely, member of the class "body part" may be, but is not limited to, full body, hand, arm or foot.

It is noted that in the context of the present disclosure annotations may designate classification labels that provide ground truth about the class of an object appearing in the collected image(s).

The training set may preferably be collected on any machine belonging to a group of machines, whereas said group of machines may comprise machines of the same or of a similar type of the machine for which the neural network may be trained.

This may allow to equip the machine with a safety control system, which may have been configured especially for said machine. Further, this may allow to equip a machine with a safety control system, without having to train the neural network on the said machine but rather on a similar or identical - but not the same - machine.

A further aspect of the present disclosure relates to a use of a machine as described hereinabove and hereinbelow. An operator may sit or stand at the machine and, using his hands, processes a workpiece with a tool of the machine. In the images collected, at least one safety zone is defined close to or around the processing tool of the machine. The safety signal is being generated when the hand of the operator is detected as the at least one body part in the safety zone in the images collected. Vice versa, e.g. as long as only the workpiece enters the safety zone, no safety signal is generated, allowing the processing of the workpiece by the tool.

A further aspect of the present disclosure relates to a computer program product. Latter computer program product comprises a plurality of program instructions, which when executed by a computing device of a safety control system as described hereinabove and hereinbelow or of a machine as described hereinabove and hereinbelow cause the computing device to process, using a trained neural network, the collected images in order to detect the presence or absence of at least one body part within at least one predefined zone of the vicinity of the machine and generate a corresponding safety signal.

A further aspect of the present disclosure relates to a method for validating a trained neural network for use in a computer program product, in particular in a computer program product as described hereinabove and hereinbelow, or for use in a computing device of a safety control system, in particular of a safety control system as described hereinabove and hereinbelow or for use in a machine, in particular a machine as described hereinabove and hereinbelow. The method comprises the steps of:
- Collecting a plurality of images of a body part being in at least a vicinity of the machine;
- Feeding the images to a trained neural network;
- Verifying whether the trained neural network correctly detects the body part and/or the position of the body part within the plurality of collected images; and
- Validating or retraining of the neural network based on the verifying step.

A further aspect of the present disclosure relates to a method for controlling a machine using a safety control system, in particular a safety control system as described hereinabove and hereinbelow, comprises the steps of:
- collecting, in particular continuously collecting, images in the vicinity of the machine with an imaging sensor equipment;
- processing by a computing device, using a trained neural network, the collected images in order to detect the presence or absence of at least one body part within at least one predefined zone of the vicinity of the machine, and generating a corresponding safety signal;
- triggering a safety measure of the machine based on the safety signal transmitted via a control unit.

Generally, any feature, function, and/or element, which is described hereinabove and hereinbelow with reference to one aspect of the present disclosure, equally applies to any other aspect of the disclosure, as described above and in the following.

It should be noted that different aspects of the invention have been disclosed with reference to different subject matters. In particular, some aspects have been disclosed with reference to device claims, whereas others have been disclosed with reference to method claims. However, a person skilled in the art may derive from the above description and the following description that, unless disclosed otherwise, in addition to any combination of features belonging to one category of subject matters, any combination between features relating to different categories of subject matters is considered to be disclosed by the present disclosure. In particular, combinations between features of device claims and features of method claims may be disclosed.

Particularly, features, functions and/or elements, as described above and in the following, with reference to the sensor assembly and/or the measurement system, equally apply to the use of the sensor assembly and/or to the method as described hereinabove and in the following, and vice versa.

These and other aspects of the invention will be apparent from and elucidated with reference to the exemplary embodiments described hereinafter.

### Brief description of the drawings

In the following, the invention is described with reference to the appended figures, which give background explanations and represent specific embodiments of the invention. The scope of the invention is however not limited to the specific features disclosed in the context of the figures.
Fig. 1 shows a safety control system for a machine according to an exemplary embodiment.
Fig. 2 shows a safety control system for a machine according to a further exemplary embodiment.
Fig. 3 shows a safety control system for a machine according to a further exemplary embodiment.
Fig. 4 shows flowchart of a method for validating a trained neural network according to an exemplary embodiment.

The figures are schematic only and not true to scale. In principle, identical or like parts, elements and/or steps are provided with identical or like reference numerals in the figures.

### Detailed description of embodiments

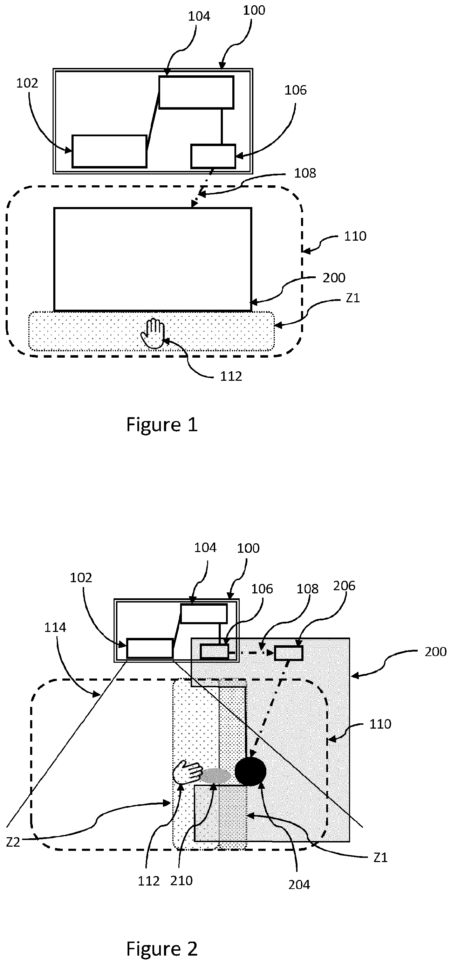

Figure 1 shows a safety control system 100 for a machine 200 according to an exemplary embodiment.

The system 100 of figure 1 may be physically independent of the machine 200 and may comprises an imaging sensor equipment 102, a computing device 104 and a control unit 106. The control unit 106 may be connectable with the machine 200. For example, the control unit 106 may be configured to establish a connection, possibly a wireless connection, to the machine 200, as soon as it detects latter machine running.

As schematically illustrated in figure 1, the vicinity of the machine 110 defines an area enclosing the machine itself. Alternatively, the vicinity of the machine may only define the adjacent area(s) of the machine. The vicinity of the machine 110 however has in general to be at least adjacent to a dangerous tool of the machine.

The imaging sensor equipment 102 of the system of figure 1 is positioned such as to collect, i.e. capture, images or videos of the vicinity of the machine. Concretely, the imaging sensor equipment 102 may consist of one or more cameras taking pictures and/or videos of or in the vicinity of the machine, preferably of the whole vicinity of the machine. The imaging sensor equipment 102 may be configured to collect images at predefined time interval. For instance, an image of the vicinity of the machine may be collected every 30 milliseconds or even more often. It is further conceivable, that the imaging sensor equipment is configured to continuously collect images of the vicinity of the machine, whereas continuously may significate that said equipment collect a video-file for instance.

The collected images may be provided to the computing device 104, which may be configured to process them. The computing device of figure 1 is configured to detect the presence and/or the absence of one or more body part within the image(s).

In order to detect a body part on an image a machine learning approach may be used. The detector, i.e. the computing device, may not be defined by an expert but may rather be obtained from a training process where said computing device finds an optimal detecting method based on a set of learning samples. The set of learning samples may be obtained by collecting images of the body part(s) aimed to be detected and manually annotating those images. Learning samples need to somehow match the final use case. They can either be taken from the exact machine on which the safety control system 100 will be used or from a similar use case, i.e. from a machine belonging to the same group of machines. Annotations consists of labeling collected images with classes indicating the ground truth of the objects appearing in the image(s) and with their position in the image. A class may be the class of the body parts comprising, but not limited to, full bodies, hands, arms, feet. Once those samples are annotated, a function may be defined, i.e. the model, which takes as input one of the training samples and outputs a score per class and a potential position. In other words, the model may output classification datasets and localization datasets, whereas both may comprise a score. Such a score may correspond to a prediction and/or a quantified probability and/or a measure for the prediction's accuracy. This model is automatically adapted by the training process in order to minimize the errors between the manual annotations and its outputs.

Different algorithms may be used to obtain localization datasets starting from the manually annotated training samples. The neural network may for instance predict coordinates (i.e. width, height and center) of bounding boxes based on different approaches, such as, but not limited to, convolutional layers, fully connected layers or k-means clustering on a training set bounding boxes. Bounding boxes may correspond to localization datasets and be defined by their width, height and center. Preferably, an approach with an average intersect over union (IOU) value equal or higher than a set threshold, e.g. higher than 50 or higher than 60 may be used to generate the bounding boxes. The model may be configured to carry out iteration in order to arrive to bounding boxes enclosing the more accurately objects appearing within the image(s). Some constrains may be applied to the iteration procedure such as to provide a reliable and fast convergence of the model toward a predefined score of the localization datasets. It is noted that the neural network may be able to predict localization datasets of the detected objects independently from the resolution of the images. It is also conceivable that the collected images may be resized. The network may however process images of various size, i.e. resolutions.

At the end of a training procedure the model, that is the function implemented in the computing device, is able to produce outputs close to the manual annotations on the training samples. If the training images resemble the images from the final use case, the model will identify and locate those body parts with high confidence and precision.

As the model is automatically optimized the only way to test may be to collect and annotate more data. This validation process may need to be done on the final use case, that is on the actual machine intended for a use of the safety control system, to ensure that the model works as intended, i.e. a targeted safety level is ensured. Depending on these results, another training phase can be done to fine-tune the model, i.e. further configure the computing device.

The computing device outputs classes and positions while processing single images as input.

The predefined zone Z1 may be predefined by an operator or a user of either the safety control system or the machine. The predefined zone Z1 is preferably set before a calibration of the safety control system. Said zone may be set via a user interface (not shown), such as a remote user interface.

It is noted that the predefined zone Z1 may be variable in time. For example, it is conceivable that the predefined zone Z1 may be programmed to follow the movement of the dangerous tool 204 of the machine 200.

Figure 2 shows a safety control system 100 for a machine 200 according to a further exemplary embodiment. Unless specified otherwise, the safety control system of Figure 2 comprises the same elements and/or components as the safety control system of Figure 1.

The safety control system 100 of figure 2 is at least partially located or installed in the machine 200. In particular, the control unit 106 may be part of the machine. The machine 200 of figure 2 comprises a processor 206, which is connectable to the control unit 106. Such a processor 206 may be configured to control a dangerous tool 204, such as a roll, a saw, a press and/or a drill.

As illustrated in figure 2, the computing device 106 may be configured to detect at least one body part within two predefined zones Z1, Z2 of the vicinity of the machine 110. In the exemplary embodiment of figure 2, a first zone Z1 may correspond to a higher level of danger while a second zone Z2 may correspond to a lower level of danger. For instance, a body part may even be expected within the second zone Z2, as the operator may need to manipulate a workpiece 210 near the dangerous tool 204. In first zone Z1 rather a workpiece may be expected. Hence, the safety measure taken by the machine 200 may further depend on the zone within which a body part has been detected. A safety measure, such as slowing down a part of the machine may for instance only be triggered by a hand being detected in zone Z1, however not by a workpiece. Although, in figure 2 the body part 112 represents a hand, alternative or additional body part(s) are conceivable.

The predefined zones Z1 and Z2 may be set by an operator of the machine, a user of the safety control system or the like. It is conceivable, that latter zones are set via a user interface (not shown). Alternatively, the predefined zones may be machine-specific and stored in the safety control system, e.g. in a database. Further alternatively or in addition the predefined zone(s) may be permanently predefined. This may avoid an unreliable or unfortunate modification of the predefined zone(s), e.g. by an unexperienced operator or user. Latter zones may for example only be redefined or modified by a certified operator or the like.

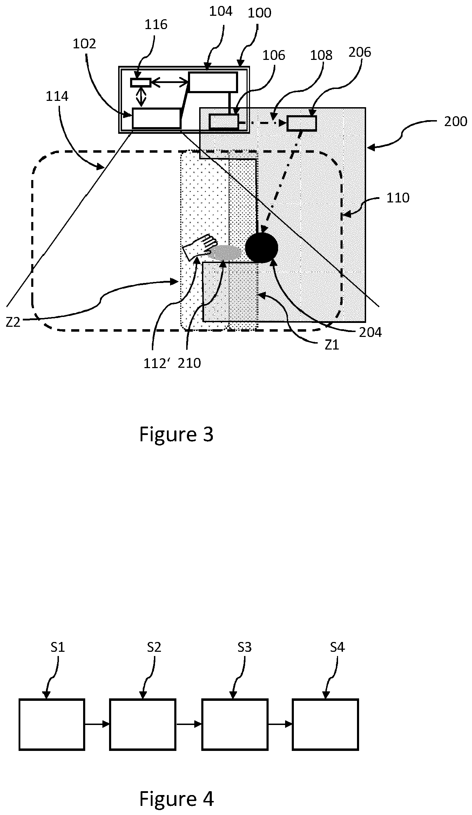

Figure 3 shows a safety control system 100 for a machine 200 according to a further exemplary embodiment. Unless specified otherwise, the safety control system of Figure 3 comprises the same elements and/or components as the safety control system of Figures 1 and 2.

The safety control system 100 of figure 3 further comprises a monitoring unit 116. The monitoring unit 116 may be configured to verify that the imaging sensor equipment 102 and/or the computing device 106 are working as expected at all time. The monitoring unit 116 may hence detect any failures or problems of the imaging sensor equipment 102 and/or the computing device 16. Based on a verification of the monitoring unit 116, the control unit 106 is configured to trigger a safety measure of the machine. The monitoring unit 116 may preferably be installed or configured separately from the other components of the safety control system and/or of the machine.

In other words, the monitoring unit 116 may execute a random check in sending a signal to the safety control system 100. The safety control system 100, i.e. the computing device 102 and/or the imaging sensor equipment 104, would have to provide the correct response to latter signal within a predefined time lap, so as to let the machine 200 know that everything works as intended. Hence, the monitoring unit 116 may be connected to a processor 206 of the machine 200. Any failure in such an operating check may trigger a safety measure of the machine.

Additional measures may be taken in order to further increase the security of a user of a machine. For example, the result of the processing of the collected images, that is the output of the model, may be post-processed. Such a post-processing may include an integration over time of the detected position of the body part such as to estimate trajectories of the body part. Using post-processing measures may improve the robustness of the safety control system without however slowing it down.

The body part 112' manipulating the workpiece 210 in figure 3 is wearing a glove or the like. The computing device 104 may be configured to discriminate between a body part 112 without any protection such as a glove and a body part 112' wearing a protection. For instance, the predefined zones Z1 and Z2 may be set or adapted, in particular dynamically set or adapted, by a user or the computing device 104 itself, depending on whether the detected body part 112' is wearing any protection.

Figure 4 shows flowchart of a method for validating a trained neural network according to an exemplary embodiment. Such a method may comprise four steps. In a first step S1, a plurality of images of a body part being in at least a vicinity of the machine 200, such as e.g. in a predefined zone Z1, Z2, may be collected. Those collected images may be fed to a trained neural network in a step S2. In a third step S3, it may be verified whether the trained neural network correctly detects the body part and/or if it correctly detected the position of the body part within the plurality of collected images.

In a fourth step S4, it is determined whether the neural network may be validated or may need more training. Latter determination may depend on the third step S3. With other words, step S4 may consist in validating or retraining the neural network based on the verifying step.

It is noted that in the context of the present disclosure the term "correctly" may signifiy that an expected range or error margin is met. For instance, a position of an object may be correctly detected if the determined or detected position correspond to 99%, 98% or 95% to the actual position of the detected object.

Latter method may be used in a computer program product, such as a computer program product as described hereinabove, in addition or alternatively, latter method may be used in a computing device of a safety control system as described hereinabove.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### List of reference signs

- 100: safety control system
- 102: imaging sensor equipment
- 104: computing device
- 106: control unit
- 108: safety signal
- 110: vicinity of the machine
- 112, 112': body part(s)
- 114: field of view
- 116: monitoring unit
- 200: machine
- 204: tool of the machine
- 206: processor of the machine
- 210: workpiece
- Z1, Z2: predefined zone(s)

## Claims

1. Safety control system (100) for a machine (200), comprising:
an imaging sensor equipment (102) configured to collect, in particular continuously collect, images in the vicinity of the machine (110);
a computing device (104) configured to process, using a trained neural network, the collected images in order to detect at least one body part (112) within at least one predefined zone (Z1) of the vicinity of the machine (110) and generate a corresponding safety signal (108); and
a control unit connectable to the machine, configured to trigger a safety measure of the machine based on the safety signal (108).

2. Safety control system (100) according to claim 1, further comprising:
a monitoring unit (116) configured to request repeatedly a reaction of the imaging sensor equipment (102) and/or the computing device (104) in response to a test measure of the monitoring unit (116);
wherein the control unit (106) is further configured to trigger a safety measure of the machine based on the reaction of the imaging sensor equipment (102) and/or computing device (104) in response to the test measure.

3. Safety control system (100) according to claim 2,
wherein the monitoring unit (116) is configured to perform the test measure in a field of view (114) of the imaging sensor equipment (102) to interact onto at least some of the images collected by the imaging sensor equipment (102) and to request the imaging sensor equipment and/or the computing device in response to send a response signal correlating with the test measure.

4. Safety control system (100) according to claim 3,
wherein the monitoring unit is configured to flash a series of lights into the field of view of the imaging sensor equipment as the test measure.

5. Safety control system (100) according to any one of the preceding claims, wherein the computing device is further configured to process the collected images at an optimized frame rate, in particular at a frame rate of at least 30 frame per second (fps).

6. Safety control system (100) according to any one of the preceding claims, wherein the triggered safety measure of the machine corresponds to stop or at least slow down a movement of a processing tool of the machine.

7. Safety control system (100) according to any one of the preceding claims, wherein the computing device is further configured to process, using a trained neural network, the collected images in order to detect at least one body part (112) within at least two predefined zones (Z1, Z2) of the vicinity of the machine (110) and generate a corresponding safety signal; wherein the at least two predefined zones (Z1, Z2) define a chosen safety level in the vicinity of the machine (110).

8. Safety control system (100) according to claim 7,
wherein the safety levels corresponds to slow down the movement of the processing tool and another one of the safety levels corresponds to stop the movement of the processing tool (204).

9. Machine (200) equipped with a safety control system (100), in particular with a safety control system (100) according to any one of the claims 1 to 8, comprising:
an imaging sensor equipment configured to collect, in particular continuously collect, images in the vicinity of the machine (110);
a computing device (104) configured to process, using a trained neural network, the collected images in order to detect at least one body part (112) within at least one predefined zone (Z1) of the vicinity of the machine (110) and generate a corresponding safety signal; and
a control unit connected to the machine, configured to trigger a safety measure of the machine based on the safety signal.

10. Machine (200) according to claim 9,
further equipped with a monitoring unit (116) configured to request repeatedly a reaction of the imaging sensor equipment (102) and/or the computing device (104) in response to a test measure of the monitoring unit (116);
wherein the control unit (106) is further configured to trigger a safety measure of the machine based on the reaction of the imaging sensor equipment (102) and/or computing device (104) in response to the test signal;
and
wherein a trigger unit of the monitoring unit (116), which triggers the test measure of the monitoring unit, is independent of the imaging sensor equipment (102) and/or of the computing device (104).

11. Machine (200) according to any one of the claims 9 and 10,
wherein the machine belongs to a set with a plurality of machines, each equipped with a safety control system (100) according to any one of claims 1 to 8, wherein the trained neural networks of these safety control systems differ from each other.

12. A use of a machine (200) according to any one of the claims 9 to 11,
wherein an operator sits or stands at the machine and, using his hands, processes a workpiece (210) with a tool of the machine;
and wherein, in the images collected, at least one safety zone (Z1) is defined close to the processing tool of the machine;
the safety signal being generated when the hand of the operator is detected as the at least one body part (112) in the safety zone (Z1).

13. Computer program product, comprising:
a plurality of program instructions, which when executed by a computing device of a safety control system (100) according to any one of claims 1 to 8 or of a machine (200) according to any one of claims 9 to 11 cause the computing device to process, using a trained neural network, the collected images in order to detect the presence or absence of at least one body part (112) within at least one predefined zone (Z1) of the vicinity of the machine (110) and generate a corresponding safety signal (108).

14. A method for validating a trained neural network for use in a computer program product, in particular in a computer program product according to claim 13, or for use in a computing device of a safety control system (100), in particular of a safety control system (100) according to any of claims 1 to 8 or for use in a machine (200), in particular a machine according to any of claims 9 to 11, comprising:
• (S1) a plurality of images of a body part (112) being in at least a vicinity of the machine (110);
• (S2) Feeding the images to a trained neural network;
• (S3) Verifying whether the trained neural network correctly detects the body part (112) and/or the position of the body part (112) within the plurality of collected images; and
• (S4) Validating or retraining of the neural network based on the verifying step.

15. A method for controlling a machine using a safety control system, in particular a safety control system according to any one of the claims 1 to 8, comprising the steps of:
• collecting, in particular continuously collecting, images in the vicinity of the machine (110) with an imaging sensor equipment (102);
• processing by a computing device, using a trained neural network, the collected images in order to detect the presence or absence of at least one body part within at least one predefined zone (Z1) of the vicinity of the machine (110); and generating a corresponding safety signal (108);
• triggering a safety measure of the machine based on the safety signal (108) transmitted via a control unit (106).
